(19) Europäisches Patentamt
European Patent Office
Office européen des brevets

(11) EP 4 322 046 A1

(12) EUROPEAN PATENT APPLICATION

(43) Date of publication:
14.02.2024 Bulletin 2024/07

(21) Application number: 22196465.3

(22) Date of filing: 20.09.2022

(51) International Patent Classification (IPC):
G06F 40/30 (2020.01)   G06F 8/30 (2018.01)
G06F 40/284 (2020.01)

(52) Cooperative Patent Classification (CPC):
G06F 40/30; G06F 8/30; G06F 40/284

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
KH MA MD TN

(30) Priority: 08.08.2022 IN 202241045145

(71) Applicant: Hitachi Energy Ltd
8050 Zürich (CH)

(72) Inventors:
• KUMAR SAHA, Barun
713212 West Bengal (IN)
• HAAB, Luca
3018 Bern (CH)
• TANDUR, Deepaknath
560068 Akshaya Nagar, Bangalore (IN)

(74) Representative: Vossius & Partner
Patentanwälte Rechtsanwälte mbB
Siebertstraße 3
81675 München (DE)

(54) **METHOD AND SYSTEM FOR GENERATING A PROCESSING LOGIC**

(57) A processing logic generation system is operative to generate a processing logic that can automatically process a textual system description related to a system. The processing logic generation system may perform a method that comprises performing an automatic labeling of textual descriptions included in a training batch of textual descriptions to generate an annotated training batch, wherein performing the automatic labeling may comprise performing a clustering technique to annotate a text item included in the training batch with a label from a set of labels based on semantic distances of the text item from text items previously assigned to labels of the set of labels.

FIG. 1

EP 4 322 046 A1

## Description

FIELD OF THE INVENTION

The invention relates to methods, devices, and systems for generating a processing logic operable to automatically process a textual system description related to a system, such as a utility system (such as an electric power system), industrial system (such as an industrial manufacturing plant), and/or a computing and/or communication network (such as a computing and/or communication network of a utility system or industrial system). The invention relates to methods, devices, and system that are operative to facilitate the processing of a textual system description related to a system, such as a utility system (such as an electric power system), industrial system (such as an industrial manufacturing plant), and/or a computing and/or communication network (such as a computing and/or communication network of a utility system or industrial system).

BACKGROUND OF THE INVENTION

Various technical systems, such as utility systems (e.g., power generation systems, power distribution systems, power transmission systems, power grids, or other utility systems such as gas, water, or sewage systems), substations of utility systems (e.g., a power system substation), industrial systems, and/or computing and/or communication networks (e.g., for utility systems) may include a significant number of components. Textual descriptions of such systems may be long, complex, and involved. The processing of textual descriptions of such systems (e.g. for the purpose of deploying suitable devices, commissioning, and/or configuring the system) is a complex task. The task is made even more arduous by the fact that the textual descriptions are not standardized and may use different semantics to describe the same or related technical aspects.

There is a need to provide techniques that assist in the complex task of processing textual descriptions of technical systems. While natural language processing, NLP, are generally known, such techniques require a training and/or test set that includes a sufficient number of labeled textual items. Generating such a training set is in itself a complex, arduous, and time-consuming task.

SUMMARY

There is a need to provide enhanced techniques for processing a textual description of a technical system. There is a need to provide techniques that allow a textual description of a technical system to be annotated by a processing logic while mitigating the challenges associated with providing a training set for generating the processing logic.

According to the invention, methods and systems as recited in the independent claims are provided.

The dependent claims define preferred embodiments.

The systems and methods according to the invention are operative to automatically label data using a clustering based on semantic distances of a textual item from previously labeled textual items. The labeled textual items may be used as (part of) a training batch for training an AI model that may be used to generate a processing logic for processing a textual description of a technical system. Alternatively or additionally, the labeled textual items may be used, ultimately, to determine a technical system configuration and/or automatically perform system commissioning and/or configuring tasks for the technical system.

There is disclosed a method of generating a processing logic operable to automatically process a textual system description related to a system. The method comprises performing an automatic labeling of textual descriptions included in a training batch of textual descriptions to generate an annotated training batch, wherein performing the automatic labeling may comprise performing a clustering technique to annotate a text item included in the training batch with a label from a set of labels based on semantic distances of the text item from text items previously assigned to labels of the set of labels.

The method may be performed by a computing system.

The textual system description may be a request for proposal (RFP) or another technical system description.

The textual descriptions may comprise requests for proposals (RFP) or other technical system descriptions.

The method may comprise training an AI model using the annotated training batch to generate the processing logic.

The processing logic may be operable to automatically process a textual system description related to a utility system (such as an electric power system), industrial system, or computing and/or communication system.

The set of labels may comprise intent classes.

The set of intent classes may comprise intent classes related to distinct devices of the system.

The set of labels may comprise attributes for at least some of the intent classes.

The attributes for an intent class may define entities related to a device to which the intent class relates.

The entities may be annotated independently of semantic distances.

Annotating entities may comprise operating a user interface to allow information on entities to be received via the user interface.

The method may further comprise executing, after the training, the AI model for processing the textual system description into an annotated textual system description.

The method may further comprise iteratively repeating the steps of performing the automatic labeling and training the AI model until a performance criterion is fulfilled.

The method may further comprise modifying the set of labels or modifying labels assigned in the automatic labelling.

The method may further comprise re-training the AI model after modifying the set of labels or modifying labels assigned in the automatic labelling.

The method may comprise modifying the set of labels.

Modifying the set of labels may comprise one or several of merging at least two labels of the set of labels into one label; splitting a label of the set of labels into at least two labels; retaining a label of the set of labels.

Modifying the set of labels may be performed automatically.

Alternatively or additionally, modifying the set of labels may be performed responsive to user input received via a user interface.

Performing the automatic labeling may comprise annotating each text item included in the training batch with a respective label from the set of labels if a semantic distance to at least one cluster in the clustering technique fulfils a semantic distance threshold criterion.

Performing the automatic labeling may comprise leaving a text item included in the training batch unannotated if the semantic distance to all clusters in the clustering technique does not fulfil the semantic distance threshold criterion.

The semantic distance of the text item to a cluster may be an averaged semantic distance of the text item to all text items that belong to the respective cluster.

The AI model may have an input layer that receives a text item included in the textual system description and an output layer that outputs an annotation for the text item included in the textual system description.

The AI model may comprise a Natural Language Processing (NLP) transformer.

The NLP transformer may comprise an encoder-decoder model.

The NLP transformer may comprise an encoder-decoder model with self-attention layers.

An encoder of the NLP transformer may comprise a stack of encoder layers.

Each encoder layer may comprise a self-attention layer and a feed-forward network.

The feed-forward network may be a fully connected 2-layer network.

The AI model may comprise a Conditional Random Field (CRF) layer which receives an output of the NLP transformer.

A method of commissioning, configuring, and/or operating a system may comprise executing the generated processing logic to automatically process a textual system description related to the system, and automatically performing at least one commissioning, configuring, and/or operating action based on an output of the processing logic.

The method may be performed automatically by at least one circuit.

The method may further comprise performing the method of an embodiment to generate a processing logic.

A method of automatically generating and/or evaluating a system configuration may comprise performing a method of an embodiment to generate a processing logic operable to automatically process a textual system description related to the system.

The method of generating and/or evaluating a system configuration may comprise receiving the textual system description related to the system; processing the textual system description using the AI model to generate an annotated textual system description; and generating output based on the annotated textual system description.

Generating output may comprise one or several of: automatically configuring at least one device of the system based on the annotated textual system description; automatically generating configuration data for at least one device of the system based on the annotated textual system description and storing the configuration data in the at least one device for field operation of the system, optionally wherein the configuration data may comprise at least one Substation Configuration Description, SCD, file, further optionally wherein the SCD file is an IEC 61850-conformant SCD file; automatically selecting devices for deployment in the system based on the annotated textual system description; automatically determining a system topology of the system based on the annotated textual system description.

A computing system adapted for generating a processing logic operable to automatically process a textual system description related to a system comprises at least one circuit adapted to perform an automatic labeling of textual descriptions included in a training batch of textual descriptions to generate an annotated training batch, wherein performing the automatic labeling may comprise performing a clustering technique to annotate a text item included in the training batch with a label from a set of labels based on semantic distances of the text item from text items previously assigned to labels of the set of labels.

The at least one circuit may be adapted for training an AI model using the annotated training batch to generate the processing logic.

The computing system may be adapted to perform the method of any embodiment.

The computing system may be adapted such that the textual system description may be a request for proposal (RFP) or another technical system description.

The computing system may be adapted such that the textual descriptions may comprise requests for proposals (RFP) or other technical system descriptions.

The computing system may be adapted for training an AI model using the annotated training batch to generate the processing logic.

The computing system may be adapted such that the processing logic may be operable to automatically process a textual system description related to a utility system (such as an electric power system), industrial system, or computing and/or communication system.

The computing system may be adapted such that the set of labels may comprise intent classes.

The computing system may be adapted such that the set of intent classes may comprise intent classes related to distinct devices of the system.

The computing system may be adapted such that the set of labels may comprise attributes for at least some of the intent classes.

The computing system may be adapted such that the attributes for an intent class may define entities related to a device to which the intent class relates.

The computing system may be adapted such that the entities may be annotated independently of semantic distances.

The computing system may be adapted such that annotating entities may comprise operating a user interface to allow information on entities to be received via the user interface.

The computing system may be adapted for executing, after the training, the AI model for processing the textual system description into an annotated textual system description.

The computing system may be adapted for iteratively repeating the steps of performing the automatic labeling and training the AI model until a performance criterion is fulfilled.

The computing system may be adapted for modifying the set of labels or modifying labels assigned in the automatic labelling.

The computing system may be adapted for retraining the AI model after modifying the set of labels or modifying labels assigned in the automatic labelling.

The computing system may be adapted for modifying the set of labels.

The computing system may be adapted such that modifying the set of labels may comprise one or several of merging at least two labels of the set of labels into one label; splitting a label of the set of labels into at least two labels; retaining a label of the set of labels.

The computing system may be adapted such that modifying the set of labels may be performed automatically.

Alternatively or additionally, the computing system may be adapted such that modifying the set of labels may be performed responsive to user input received via a user interface.

The computing system may be adapted such that performing the automatic labeling may comprise annotating each text item included in the training batch with a respective label from the set of labels if a semantic distance to at least one cluster in the clustering technique fulfils a semantic distance threshold criterion.

The computing system may be adapted such that performing the automatic labeling may comprise leaving a text item included in the training batch un-annotated if the semantic distance to all clusters in the clustering technique does not fulfil the semantic distance threshold criterion.

The computing system may be adapted such that the semantic distance of the text item to a cluster may be an averaged semantic distance of the text item to all text items that belong to the respective cluster.

The computing system may be adapted such that the AI model may have an input layer that receives a text item included in the textual system description and an output layer that outputs an annotation for the text item included in the textual system description.

The computing system may be adapted such that the AI model may comprise a Natural Language Processing (NLP) transformer.

The computing system may be adapted such that the NLP transformer may comprise an encoder-decoder model.

The computing system may be adapted such that the NLP transformer may comprise an encoder-decoder model with self-attention layers.

The computing system may be adapted such that an encoder of the NLP transformer may comprise a stack of encoder layers.

The computing system may be adapted such that each encoder layer may comprise a self-attention layer and a feed-forward network.

The computing system may be adapted such that the feed-forward network may be a fully connected 2-layer network.

The computing system may be adapted such that the AI model may comprise a Conditional Random Field (CRF) layer which receives an output of the NLP transformer.

A commissioning, configuring, and/or operating system may be operative to execute the generated processing logic to automatically process a textual system description related to the system, and to automatically perform at least one commissioning, configuring, and/or operating action based on an output of the processing logic.

The commissioning, configuring, and/or operating system may be adapted for performing the method of an embodiment to generate a processing logic.

A system for automatically generating and/or evaluating a system configuration may be adapted for performing a method of an embodiment to generate a processing logic operable to automatically process a textual system description related to the system.

The system for automatically generating and/or evaluating a system configuration may be adapted for receiving the textual system description related to the system; processing the textual system description using the AI model to generate an annotated textual system description; and generating output based on the annotated textual system description.

The system for automatically generating and/or evaluating a system configuration may be adapted such that generating output may comprise one or several of: automatically configuring at least one device of the system based on the annotated textual system description; automatically generating configuration data for at least one device of the system based on the annotated textual system description and storing the configuration data in the at least one device for field operation of the system, optionally wherein the configuration data may comprise at least one Substation Configuration Description, SCD, file, further optionally wherein the SCD file is an IEC 61850-conformant SCD file; automatically selecting devices for deployment in the system based on the annotated textual system description; automatically determining a system topology of the system based on the annotated textual system description.

There is also disclosed a utility system (e.g., an electric power utility system) and/or communication system that comprises one or several devices (such as Intelligent Electronic Devices (IEDs)) and a system according to an embodiment operative to commission, configure, and/or control operation of the utility system or communication system.

The methods, devices, and systems according to the invention can be used for generating and/or using a processing logic capable of automatically processing a textual system description.

The methods, devices, and systems allow labelled textual descriptions to be generated that can be used for training an AI model, without being limited thereto.

Labeled textual descriptions can be generated using automatic labeling that includes performing a clustering technique based on semantic distances.

The methods, devices, and systems according to the invention can be used in association with a utility system and/or a communication network of a utility system or IACS, e.g. a communication network of a power generation, transmission, or distribution system.

BRIEF DESCRIPTION OF THE DRAWINGS

The subject-matter of the invention will be explained in more detail with reference to preferred exemplary embodiments which are illustrated in the attached drawings, in which:

Figure 1 is a schematic representation of a system operative to generate a processing logic.
Figure 2 is a flow chart of a method.
Figure 3 is a schematic representation illustrating clustering based on semantic distances.
Figure 4 is a flow chart of a method.
Figure 5 is a schematic representation of a system.
Figure 6 is a schematic representation of a system.

Figure 7 is a flow chart of a method.
Figure 8 is a schematic representation of an artificial intelligence (AI) model.
Figure 9 is a schematic representation of an artificial intelligence (AI) model.
Figure 10 is a schematic representation of an artificial intelligence (AI) model.
Figure 11 is a block diagram representation of a method.
Figure 12 is a flow chart of a method.
Figure 13 is a flow chart of a method.
Figure 14 is a schematic representation of exemplary labels.
Figure 15 is a schematic representation of exemplary additional labels.
Figure 16 is a flow chart of a method.
Figure 17 illustrates an annotated text item with a label that includes an intent class and at least one attribute.
Figure 18 is a flow chart of a method.
Figure 19 is a schematic representation of data structures useful in a method and/or by a system according to embodiments.
Figure 20 is a flow chart of a method.
Figure 21 is a flow chart of a method.
Figure 22 is a diagram illustrating a system.

DETAILED DESCRIPTION OF EMBODIMENTS

Exemplary embodiments of the invention will be described with reference to the drawings in which identical or similar reference signs designate identical or similar elements. While some embodiments will be described in the context of communication systems or other components of a utility system (such as a power generation, transmission, and/or distribution system), the methods, devices, and systems described in detail below may be used in a wide variety of systems such as other utility systems or industrial systems.

The features of embodiments may be combined with each other, unless specifically noted otherwise.

According to embodiments of the invention, clustering techniques based on semantic distances are used to automatically label a textual description related to a technical system, such as a utility system, communication system, or a communication system of a utility system. The automatically labeled textual descriptions may be used for training an artificial intelligence (AI) model, without being limited thereto.

The AI model may have an input layer to receive a text item, an output layer to output at least one label for the text label (and optionally both an intent class and one or several attribute(s) for at least some of the text items), and hidden layers. The AI model may include a natural language processing (NLP) transformer.

The trained AI model may be used to process a textual system description. The results of the processing performed by the trained AI model that acts as a processing logic may be used for commissioning, configuring, and/or controlling operation of one or several devices of a utility system (such as an electric power system), communication system, or communication system of a utility system, without being limited thereto.

As used herein, an "annotated textual description" refers to a textual description which includes labels for text items of the annotated textual description. It is possible but not required that all, most, or at least a majority of the text items of the textual description are provided with labels.

Any text item may be provided with more than one label. For illustration, a text item may be labeled with an intent and one or several optional attributes for that intent.

As used herein, the term "text item" refers to a portion of natural language text. The text item may include or may be a sentence, a phrase, a word, and/or another alphanumeric term (such as a numerical value and units).

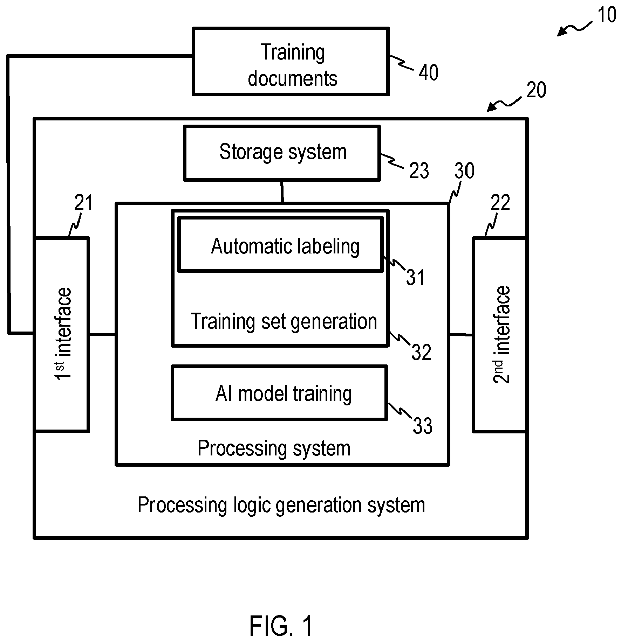

Figure 1 is a representation of a system 10 that comprises a data storage 40 and a processing logic generation system 20.

The data storage 40 is operative to store several textual descriptions of a technical system (such as a utility system, e.g. an electric power system, or a communication system). The several textual descriptions may include specifications of one or several technical systems that may have the same technical system type (such as a substation) or that may be assigned to various different technical system types. A first sub-set of the textual descriptions may be annotated with labels. A second sub-set of the textual descriptions may be un-annotated before being acted on by processing logic generation system 20. The data storage 40 may be separate from the processing logic generation system 20 but may also be an integral part thereof.

The processing logic generation system 20 is generally operative to automatically assign labels to text items included in textual descriptions that are not yet annotated. The processing logic generation system 20 may be operative to generate a larger set of annotated textual descriptions that may be used for AI model training, to thereby generate a processing logic. The processing logic generation system 20 may be operative to deploy the generated processing logic for execution by another computing device. Alternatively or additionally, the processing logic generation system 20 may be operative to execute the generated processing logic to perform a commissioning, configuring, and/or operation task for a technical system (such as a utility system or communication system).

The processing logic generation system 20 comprises a first interface 21 operative to retrieve system descriptions included in the first sub-set (i.e., annotated system descriptions) and/or system descriptions included in the second sub-set (i.e., un-annotated system descriptions).

The processing logic generation system 20 may include a processing system 30. The processing system 30 may include one or several circuits, such as field programmable gate arrays (FPGAs), application specific integrated circuits (ASICs), controller(s), processor(s), superconducting circuit(s), quantum bit (qubit) processing circuits, without being limited thereto.

The processing system 30 may be operative to temporarily store system descriptions in a storage system 23. The processing system 30 may be operative to execute an automatic labeling process 31. The automatic labeling process may be executed to generate labels for text items included in textual descriptions of the second sub-set (i.e., the originally unannotated textual descriptions).

The labeling may be performed as part of a training set generation process 32 of automatically generating a training set for AI model training. The processing logic generation system 20 may be operative to automatically generate at least some of the annotated textual descriptions that are included in a training batch for training an AI model.

The processing system 30 may be operative to retrieve information on a topology of one or several candidate AI model architectures from the storage system 23. For illustration, the storage system 23 may have included therein information on an AI model architecture (specifying hyperparameters such as a number of encoder or decoder layers etc.). The processing system 30 may retrieve the architecture for training. The processing system 30 may be operative to control a user interface to enable a user to input information specifying which AI model architecture is to be used for AI model training.

The processing logic generation system 20 may have a second interface 22. The trained AI model may be output, via the second interface 22, as processing logic for execution by a commissioning, configuring, and/or system control device. Alternatively or additionally, results obtained by executing the trained AI model as processing logic may be output via the second interface 22. This may be done to perform a commissioning, configuring, and/or system control operation, without being limited thereto.

The processing logic generation system 20 may be operative to use clustering techniques (such as clustering techniques based on semantic distances) to automatically annotate textual descriptions.

The processing logic generation system 20 may be operative to perform an iterative process in which a set of labels from which the labels assigned by the processing logic generation system 20 can be chosen and/or the assigned labels may be modified. This may comprise controlling a user interface to enable a user to modify the set of labels and/or the assigned labels. Alternatively or additionally, the processing logic generation system 20 may be operative to automatically modify the set of labels and/or the assigned labels.

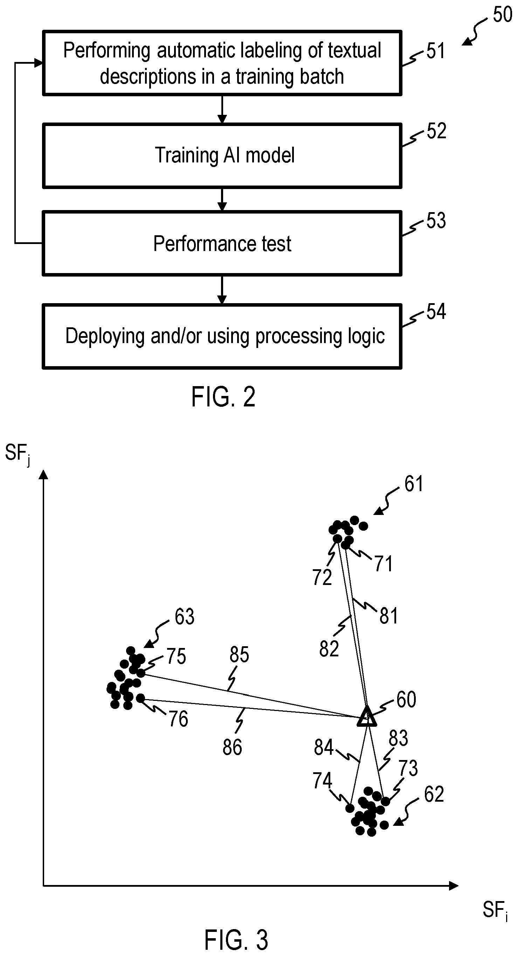

Figure 2 is a flow chart of a method 50. The method may be performed automatically by or using a computing system. The method may be performed automatically by the processing logic generation system 20.

At step 51, an automatic labeling is performed for textual descriptions included in a training batch. The automatic labeling may be performed using clustering techniques based on semantic distances. The automatic labeling may assign labels (which may include an intent class and optionally one or several attributes for at least some of the intent classes) to text items. This may be performed for some, at least 30%, at least 40%, at least 50%, at least 60%, at least 70%, at least 80%, at least 90%, or all text items in the textual description.

At step 52, the annotated textual descriptions may be used to train an AI model. The AI model may have an input layer operative to receive a text item, a natural language processor (NLP), and an output layer operative to output a label for the text item. Training may use various implementations, such as supervised learning techniques, without being limited thereto.

At step 53, the trained AI model may be subjected to a text. Testing may include evaluating a performance based on annotated textual descriptions included in the data storage 40 that were not used for the training. Thresholding may be used to determine whether the trained AI model satisfies a performance criterion or does not satisfy the performance criterion. Depending on a result of the performance evaluation, steps 51-53 may be repeated in an iterative manner until the performance criterion is fulfilled or another termination criterion (such as a comparison of a number of loops completed to a termination threshold) is fulfilled.

At step 54, the trained AI model determined in the last iteration may be deployed as a processing logic. Alternatively or additionally, the processing logic may be executed by a commissioning, configuring, and/or system control tool to process a textual description of the technical system that is to be commissioned, configured, and/or controlled and to perform a commissioning, configuring, and/or system control task based thereon.

The processing logic generation system 20 and/or the method 50 may use clustering based on semantic distances to automatically assign a label to a text item. A text item may be assigned to a given label included in a set of labels based on averaged semantic distances from at least one, at least two, a majority of, or all text items previously assigned to the given label. The text item may be assigned to that label for which the averaged semantic distance is minimum, from among the calculated averaged semantic distances. This may be performed conditionally depending on a quality criterion. For illustration, a text item may be automatically labeled with the label for which the averaged semantic distance is minimum, from among the calculated averaged semantic distances, provided that this minimum is less than or does not exceed a distance threshold. Otherwise, the text item may remain unlabeled.

Figure 3 illustrates the clustering based on semantic distances. Figure 3 shows a space spanned by semantic features. While a two-dimensional plot is shown in Figure 3 for illustration, it is understood that there may be more than two semantic features that are used in the cluster technique (e.g., three or more, four or more, five or more, ten or more, twenty or more, fifty or more semantic features).

A text item 60 may be retrieved from an unannotated textual description. The text item 60 may be a sentence, a phrase, a word, or a combination of a numerical value and units.

In the textual descriptions that are annotated (e.g., that are stored as human-annotated documents in the data storage 40 and/or that are annotated by a human expert responsive to a control operation of the processing logic generation system 20 that enables the human expert to enter the annotation), there may be several clusters 61-63 of annotated text items. The clusters 61-63 may comprise a first cluster 61, a second cluster 62, and a third cluster 63. More clusters may, and typically are, present.

All annotated text items 71, 72 in the first cluster 61 are labeled with a same or similar first label. For illustration, all text items 71, 72 in the first cluster 61 may have previously been labeled with a same first intent class. The text items 71, 72 in the first cluster 61 may but do not need to be labeled with a same attribute.

All annotated text items 73, 74 in the second cluster 62 are labeled with a same or similar second label. For illustration, all text items 73, 74 in the second cluster 62 may have previously been labeled with a same second intent class. The text items 73, 74 in the second cluster 62 may but do not need to be labeled with a same attribute.

All annotated text items 75, 76 in the third cluster 63 are labeled with a same or similar third label. For illustration, all text items 75, 76 in the third cluster 63 may have previously been labeled with a same third intent class. The text items 75, 76 in the third cluster 63 may but do not need to be labeled with a same attribute.

Semantic distances of the text item 60 that is to be labeled from the existing clusters 61-63 may be determined. The text item 60 may be labeled (i.e., assigned with a label, which may include an intent class and optional attributes) based on the semantic distances.

The semantic distance may be determined in accordance with a metric, using any one of the various conventional ways of determining semantic distances.

The semantic distance may be determined by computing a semantic distance in the space spanned by two or more semantic features of the text item 60 from respectively at least one text item assigned to each of several clusters 61-63.

Averaging techniques may be used. For illustration, an averaged semantic distance of the text item 60 from the first cluster 61 may be computed by averaging distances 81, 82 between the text item 60 to be labeled and two, more than two, or all text items 71, 72 that have previously been determined to belong to the first cluster. An averaged semantic distance of the text item 60 from the second cluster 62 may be computed by averaging distances 83, 84 between the text item 60 to be labeled and two, more than two, or all text items 73, 74 that have previously been determined to belong to the second cluster. An averaged semantic distance of the text item 60 from the third cluster 63 may be computed by averaging distances 85, 86 between the text item 60 to be labeled and two, more than two, or all text items 75, 76 that have previously been determined to belong to the third cluster.

The label (e.g., intent class and optional attribute(s)) for the text item 60 may then be determined based on the determined semantic distances.

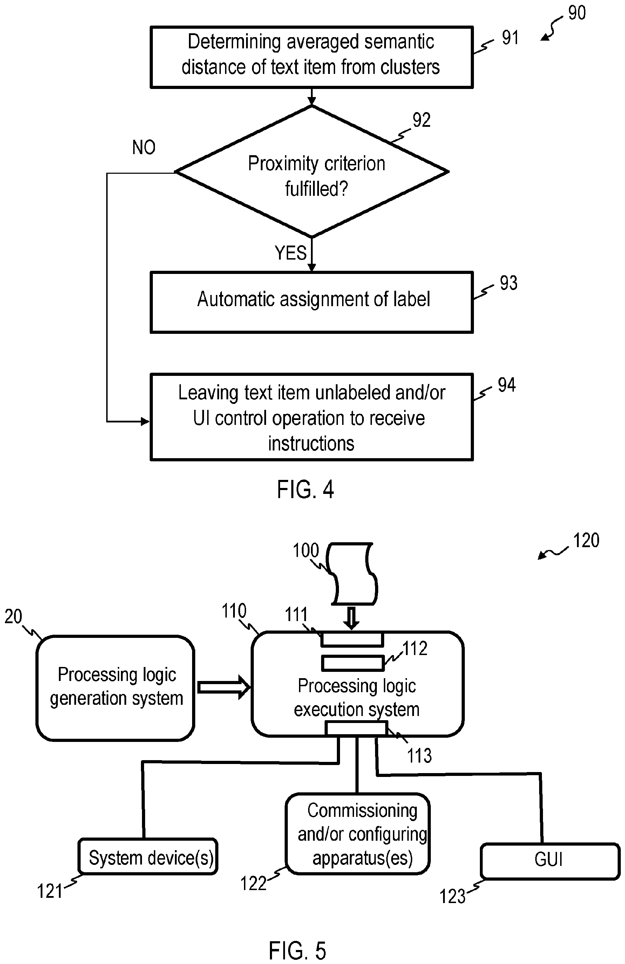

As noted above and further illustrated in Figure 4, text items to be labeled may be selectively left unlabeled.

Figure 4 is a flow chart of a method 90.

At step 91, averaged semantic distances of a text item to be labeled from several clusters are determined.

At step 92, it is determined whether at least one of the averaged semantic distances complies with a proximity criterion. The proximity criterion may include that at least one of the averaged semantic distances is less than or not greater than a distance threshold.

At step 93, if it is determined that the proximity criterion is fulfilled, the text item is automatically labeled. The text item may be labeled with the label (e.g., intent class and optional attribute(s)) for which the averaged semantic distance is minimum.

At step 94, if it is determined that the proximity criterion is not fulfilled, the text item may be left unlabeled for the time being. The processing logic generation system may control a user interface to enable a user to label that text item. Alternatively or additionally, the procedure 90 may be reexecuted later. For illustration, if labels are added and/or modified, the proximity check at step 92 may lead to a different result in a subsequent iteration.

Figure 5 is a schematic representation of a system 120.

The system 120 includes a processing logic generation system 20 which may be operative and/or designed as described herein.

The system 120 includes a processing logic execution system 110. The processing logic execution system 110 may be coupled to the processing logic generation system 20 via a local area network (LAN) or a wide area network (WAN).

The processing logic execution system 110 may receive the processing logic generated by the processing logic generation system 20. The processing logic may be stored in the processing logic execution system 110 in a non-volatile manner. The generated processing logic may be the AI model trained by the processing logic generation system 20 and/or trained using a method as disclosed herein.

The processing logic execution system 110 may have a first interface 111 operative to receive a textual system description 100. The textual system description may be un-annotated. The processing logic execution system 110 may be operative to execute the processing logic to generate an annotated textual system description 100 in which some, most, or all text items of the textual system description 100 have been labeled with labels (e.g., with intent classes and optional attributes).

The processing system 110 may include one or several circuits 112 to execute the processing logic, such as field programmable gate arrays (FPGAs), application specific integrated circuits (ASICs), controller(s), processor(s), superconducting circuit(s), quantum bit (qubit) processing circuits, without being limited thereto.

The processing logic execution system 110 may have a second interface 113. A result of the execution of the processing logic by the processing logic execution system 110 may be used to generate control signals. The control signals may be generated to at least one of: control operation of device(s) 121 of the technical system to which the textual description 100 relates; control a commissioning and/or configuring apparatus or tool 122 to commission and/or configure at least some of the device(s) 121 for operation in the technical system to which the textual description 100 relates; and/or control a user interface, such as graphical user interface (GUI) 123, to output information on the processing results and/or enable user input actions responsive to results of the execution of the processing logic as applied to the textual description 100.

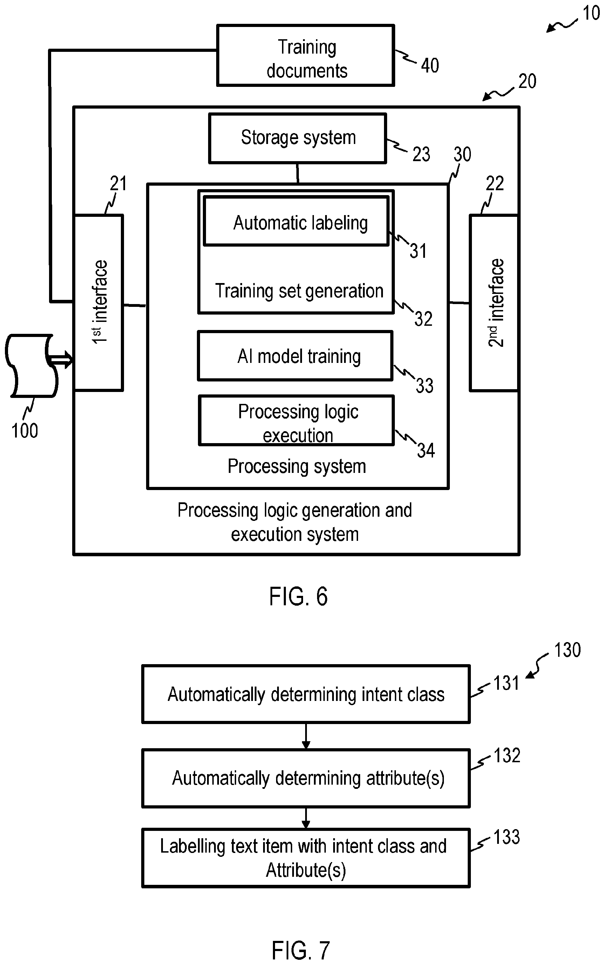

The processing logic generation and execution systems may be integrally formed, as illustrated in Figure 6.

Figure 6 shows a processing logic generation and execution systems that is operative to perform automatic labeling, optional AI model training, and/or other tasks, and which also includes a processing logic execution routine 34 to execute the generated processing logic to process a textual description 100 received by combined processing logic generation and execution system 20.

Labels may be selected from a pre-defined set. The labels may include a more complex structure. For illustration, labels may include an intent class selected from a set of intent classes. For at least some of the intent classes (and depending on the intent class), the labels may include one or several attribute(s). The attribute(s) may vary depending on intent class. Assigning labels may comprise both assigning intent classes and assigning attribute(s) for those intent classes for which there are attributes.

The various intent classes may relate to different technical devices of the technical system (such as communication switches, communication firewalls; and/or circuit breakers, power system switches, distributed energy resources, energy storage devices; and/or controllable valves, controllable pumps, etc.).

Figure 7 is a flow chart of a method 130. The method may be performed automatically by the processing logic generation system 20.

At step 131, an intent class is automatically determined for a text item to be labeled. The intent class may be determined based on averaged semantic distances of the text item to be labeled from text items belonging to clusters assigned to different intent classes.

At step 132, attribute(s) may be automatically determined for the text item to be labeled. Step 132 may be performed selectively depending on whether attribute(s) are supported for the determined intent class.

At step 133, the text item may be labeled with the intent class and, if attribute(s) are supported for this intent class, with the determined attribute(s).

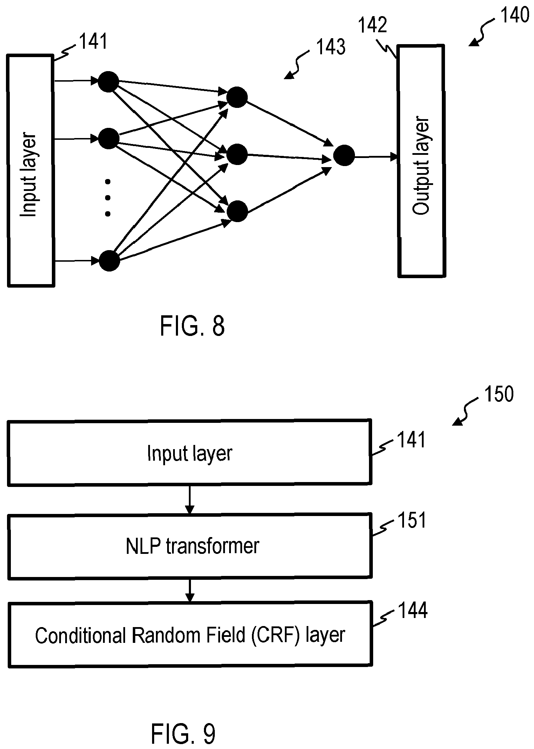

Figures 8 to 10 show AI model architectures that may be used.

Figure 8 is a schematic representation of an AI model 140 that may be used by the processing logic generation system 20 and/or in the method disclosed herein.

The AI model may have an input layer 141 operative to receive a text item included in the textual system description. The AI model may have an output layer 142 operative to output an annotation (i.e., a label, such as an intent class and optional attribute(s)) for the text item included in the textual system description.

The AI model may have one or several hidden layers 143.

During AI model training, parameters of the AI model 140 may be set to improve performance of the AI model in its desired task, i.e., automatic labeling.

Figure 9 is a schematic representation of an AI model 150 that may be used by the processing logic generation system 20 and/or in the method disclosed herein.

The AI model may have an input layer 141 operative to receive a text item included in the textual system description. The AI model may have an output layer operative to output an annotation (i.e., a label, such as an intent class and optional attribute(s)) for the text item included in the textual system description.

The AI model may comprise a NLP transformer 151. The NLP transformer 151 may comprise an encoder-decoder model with self-attention layers.

The AI model may comprise a Conditional Random Field (CRF) layer 144 which receives an output of the NLP transformer 151.

During AI model training, parameters of the AI model 150 may be set to improve performance of the AI model in its desired task, i.e., automatic labeling.

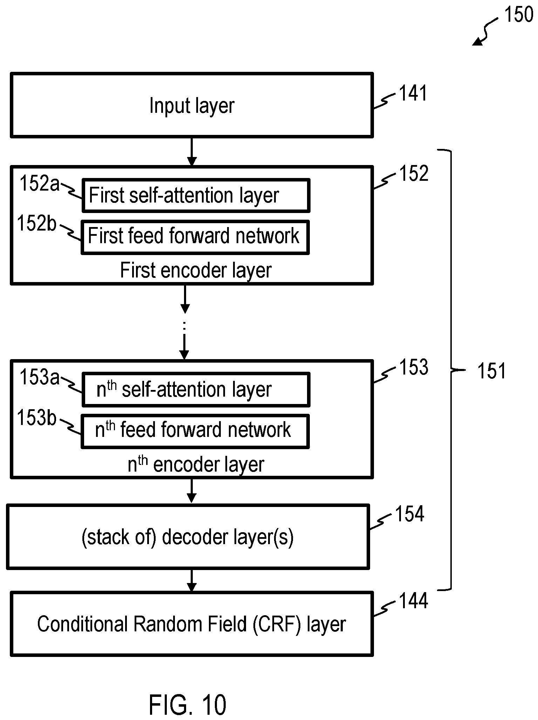

Figure 10 is a schematic representation showing a more detailed implementation of the AI model 150 that may be used by the processing logic generation system 20 and/or in the method disclosed herein.

The NLP transformer 151 may comprise an encoder-decoder model. The NLP transformer 151 may comprise an encoder-decoder model with self-attention layers.

An encoder of the NLP transformer may comprise a stack of encoder layers 152, 153, each encoder layer 152, 153 comprising a self-attention layer 152a, 153a and a feed-forward network 152b, 153b.

Each feed-forward network 152b, 153b may be a fully connected 2-layer network.

The techniques disclosed herein may be applied to textual descriptions that are or comprise requests for proposal (RFPs), without being limited thereto.

Systems and methods disclosed herein may be operative to:

- Extract text from many (e.g., hundreds to thousands) textual system descriptions (such as RFPs, without being limited thereto) pertaining to the domain (e.g., to a utility system such as an electric power system).

- Enable a domain expert to annotate a small fraction of the textual system descriptions by assigning appropriate labels to the sentences or line. This may constitute an initial annotated data set. The labels may act as clusters.

- Process the remainder of the extracted text in multiple batches.

- For each individual text item in a batch, find the closest matching label by considering the semantic distance between the item and the already assigned data points in the cluster (label).

- At the end of a batch, train an AI model based on the available data set.

- Iterate though the prediction errors and reassign labels if required. Automatic recommendations on modifying (e.g., splitting/merging) labels may be provided whenever appropriate. The reassignment of labels may comprise controlling a user interface to enable a user to reassign or otherwise modify labels.

These aspects are discussed in more detail below.

The systems and methods disclosed herein allow a definition of a data model and subsequent refinements based on information extracted from textual system descriptions.

The systems and methods disclosed may comprise the use of supervised learning techniques to generate a labeled data set (e.g., a set of annotated textual descriptions).

The systems and methods disclosed herein enable a performance based generation and selection of an AI model trained with labeled data

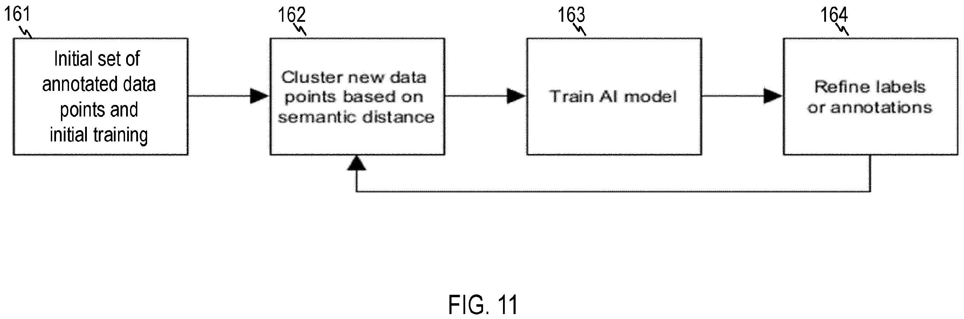

Figure 11 illustrates an automated text annotation process that may be used for creating a labeled data set. The process may be triggered after text from textual system descriptions (e.g., a substantial volume of textual descriptions such as RFPs) is extracted and stored in the data storage 40.

At 161, a fraction of the available text may be annotated by choosing the appropriate labels. This may be done by controlling a user interface to request expert input for the labeling. This initial labeling may but does not need to form part of the method. I.e., the disclosed techniques may also start with an initial data set that already includes (some) labeled textual descriptions, in addition to (more) unlabeled textual descriptions.

For example, a sentence from an textual system description may specify an intended feature of a communication switch ( such as , "It should support Rapid Spanning Tree protocol"). This sentence can be labeled as "switch_specification." In general, both technical specifications and optional other information from textual system descriptions can be labeled. For example, the sentence "The bid should be valid for 180 days" can be labeled as "bid_validity." New labels can be manually created if required.

At 161, initiation training may be performed. Annotations may be added to the initial data set. This may be continued until a desired volume and performance are obtained. While the desired volume and performance may depend on the context, one exemplary objective is to achieve at least 100 data points per label. With such a volume, one can aim to achieve at 75-85% precision and recall each. These thresholds are to be determined appropriately.

After an initial data model is trained with initial set of data points, the remaining text extracted from the textual system descriptions may be automatically annotated in multiple batches at step 162.

For this purpose, each label (e.g., intent) can be considered as a cluster. All texts annotated with that particular label can be considered as the points or items belonging to that particular cluster.

For illustration, a single unannotated text item will be considered. The semantic distance of this text item from each of the points of that cluster may be computed and the average distance from that cluster may be obtained accordingly. The process may be repeated for every label or cluster. The cluster with the minimum averaged semantic distance may be determined. This may be the cluster to which the concerned text item should belong. In other words, the text item is annotated with that particular cluster label.

This process may be repeated for all the unannotated text items in the current batch.

At step 162, the initial data set is augmented with the new annotations obtained from the current batch.

At step 164, based on the new augmented data set, a new AI model is trained. The model may be tested using the test data. Evaluation may involve control of a user interface to enable a user to enter feedback. Alternatively or additionally, the evaluation may be performed automatically. For illustration, a user interface may be controlled such that prediction errors indicating the actual label (annotation) of a text item and the predicted label may be presented to a user. The user, based on domain knowledge and understanding, can (1) change the annotation to the predicted one, (2) retain the original annotation, or (3) delete the annotation and text item. This process may be repeated for some, most, or all of the prediction errors.

The process may be repeated iteratively. For illustration, a new model may be trained subsequently. The labels may be further refined based on the prediction errors or the current batch is marked as completed.

### *Automatic labeling*

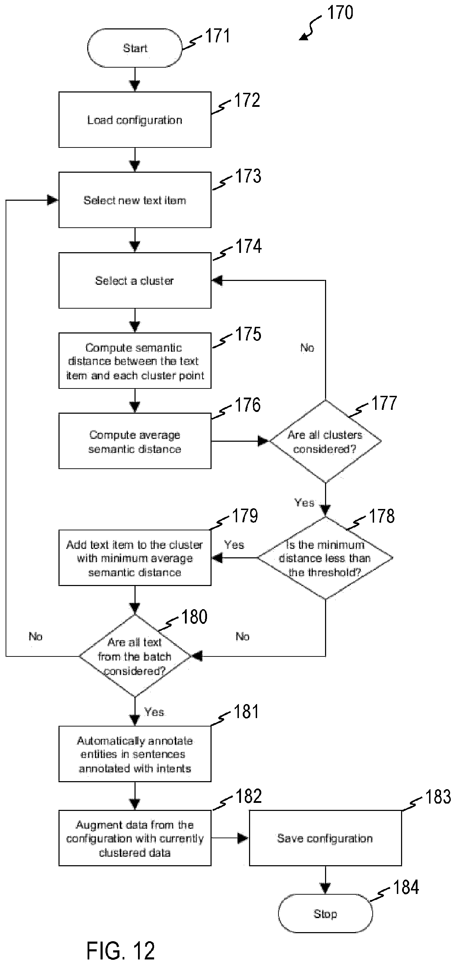

Automatic labeling may be performed both when generating an initial set of annotated textual descriptions (e.g., at steps 161 and 162 in Figure 11) and when generating updated annotated textual descriptions (e.g., at step 162 in Figure 12 in subsequent iterations of the process).

The automatic labeling may be performed by performing a supervised clustering-based automatic annotation process.

Starting with an initial data set of intent annotations, a larger set of data points is automatically generated using the supervised clustering methods, such as k-nearest neighbors. Intent labels may be assigned to a set of unseen plain-text data extracted from textual system descriptions based on a pre-trained natural language understanding (NLU) model. The NLU model is one example of the AI model or at least part of the AI model used herein.

This may be implemented as follows:
$X_i$ designates a non-empty set of labels (such as intents) $i, \forall i$. $x_{ij}$ designates be a text item annotated with the label $X_i$. $y$ designates an unannotated text item. $d(y, z)$ designates a semantic distance between two text items, $y$ and $z$.

When two sentences are very similar, their semantic distance is close to 0. On the other hand, the semantic distance between two very dissimilar sentences is close to 1.

$D(y, X_i) = (1/|X_i|) \Sigma_j \, d(y, x_{ij})$ denotes an average semantic distance between y and label $X_i$, where $x_{ij} \in X_i$, $\forall j$.

The label (or cluster) to which the text y belongs

$$y = \arg\min_i D(y, X_i)$$

may be determined as .

In this manner, the text y may be automatically annotated with the label Y. However, if the average semantic distance is greater than a pre-defined threshold, the annotation of the text item may be skipped.

The above process may be repeated for all unannotated text items from the current batch.

Figure 12 illustrates the method 170 described above.

At step 171, the method starts.

At step 172, a configuration may be loaded, which may include the previously labeled text items and their labels.

At step 173, a new text item may be selected which is to be labeled.

At steps 174-177, an averaged semantic distance of the text item to be labeled from several previously identified clusters (labels) is determined.

At step 178, it is determined whether the text item fulfils a proximity criterion (e.g., the minimum distance D(y, Y)) being less than or not greater than a predefined threshold.

At step 179, the determined label may be added.

At step 180, it is determined whether all text items from the batch has been considered. Steps 173-179 may be repeated until all text items have been considered.

At step 181, attributes may be added. For illustration, entities may be annotated in sentences that have been annotated with intents. This may be done automatically. The annotations with entities may include controlling a user interface to allow a user to provide entity annotations.

At step 182, the previously existing set of annotated textual descriptions is augmented by adding the annotated textual descriptions for which labels have been added in steps 173-181.

At step 183, the configuration may be saved.

At step 184, the method ends.

In addition, after all relevant text in the unseen set of data have been annotated with intents, the entities, if any, may be annotated. The pre-trained NLU model and/or other advanced techniques, such as Conditional Random Field, may be used to identify the entities within the intent-annotated sentences. The so identified phrases are then annotated with entities.

The aforementioned process of supervised clustering-based intent annotation ends with augmenting the initial training data set with newly generated data set. The configuration (discussed later) is saved for the future use.

*Data Model*

A data model may be used that specifies possible labels. The generation of the data model may precede the techniques disclosed herein.

The processing logic generation system 20 may be operative to control a user interface to allow a user to define the data model. Before text is annotated, the underlying data model may thus be defined. The data model can be refined at later stages The processing logic generation system 20 may be operative to control a user interface to allow a user to add a set of labels or categories to the system. These labels can pertain to the products and services that may be used in the technical system to which the textual system descriptions relate. For example, if the textual description relates to a communication system that can include network switches, the "switch_specification" label can be created to capture the technical specifications related to a network switch. The name indicated in a label may be singular, but this is not mandatory. Consistency in naming is normally desirable. The labels can pertain to other information of interest as well. For example, "bid_validity" is another label that indicates the validity period of a bid submitted in response to an textual system description.

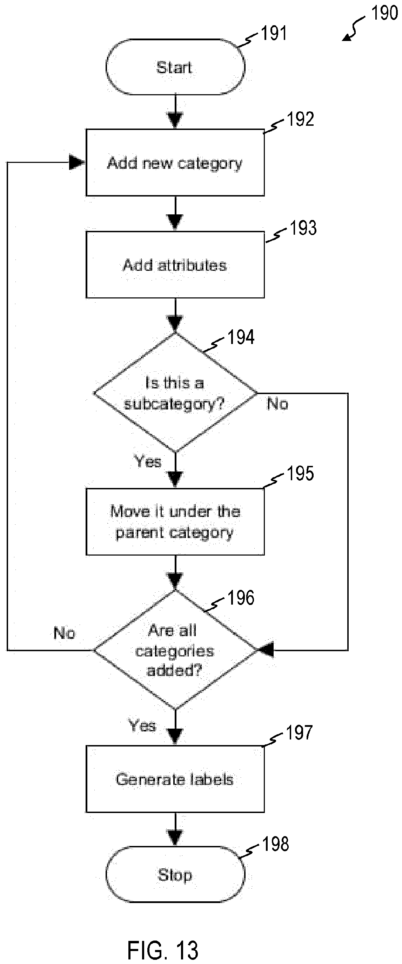

Figure 13 illustrates the iterative process 190 of data model generation. The labels or categories can be hierarchical in nature. For example, the labels "core_switch_specification" and "edge_switch_specification" can be marked as children of the parent category "switch_specification." In addition, for each label (category), a set of attributes are defined. For example, a switch may have an attribute "protocol," which captures all protocols that need to be supported. In case of a hierarchical model, attributes of a parent category are inherited by all of its child categories. The process may be repeated until all desired categories (intents) and attributes (entities) are added into the system.

At step 191, the process starts.

At step 192, a new category is added. This may comprise accessing a database (e.g., an inventory database) to automatically retrieve possible labels and/or controlling a user interface to allow a user to specify (e.g. input or select) the label for a new category.

At step 193, new attributes may be added. This step may be optional depending on the category (e.g., intent class) defined at step 192. The attributes may be determined by accessing a database (e.g., an inventory database) to automatically retrieve possible labels and/or controlling a user interface to allow a user to specify (e.g. input or select) the label for a new category.

At step 194, it may be determined whether the category of step 192 is a subcategory. If it is, step 195 allows the category to be associated with its parent.

At step 195, it is determined whether all categories have been added. If not, the method returns to step 192.

At step 197, if all categories (possible labels) have been added, a set of possible labels is generated. From this set, labels can be selected in the automatic labeling.

At step 197, two sets of labels may be generated. A first set of labels may contain the intents that need to be capture from the textual system descriptions. The second set of labels may correspond to the entities that need to be captured from the intents. The processing logic generation system 20 may be operative to control a user interface such that the sets of intent labels and entity labels are displayed to users in a graphical user interface (GUI).

At step 198, the method ends.

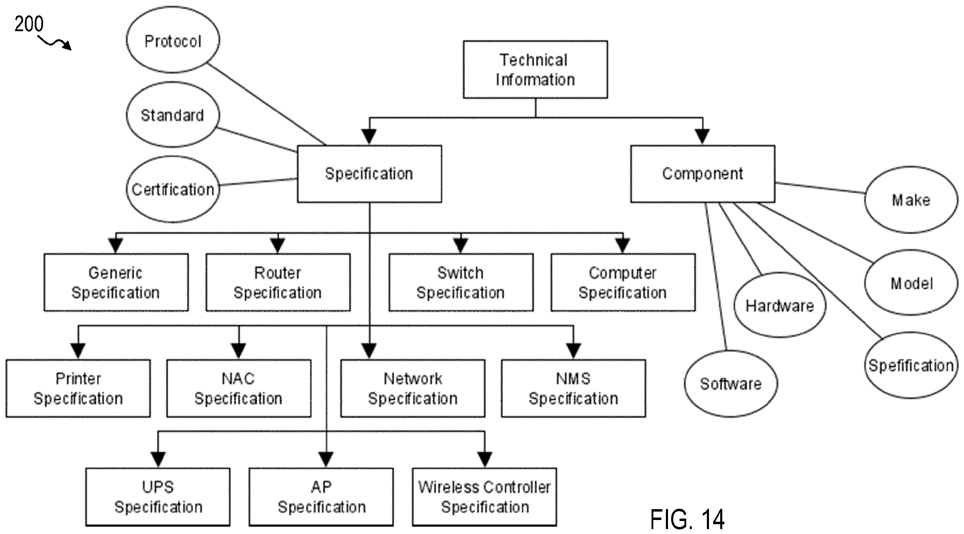

Figure 14 shows an example for a data model 200 that can be used to capture technical specifications from an textual system description for communication (e.g., networking) systems. The rectangles indicate the label (or intent), whereas the ellipses denote the attributes (entities). The specific intents present in a data model depends upon the respective technical system and the type of products or services used therein.

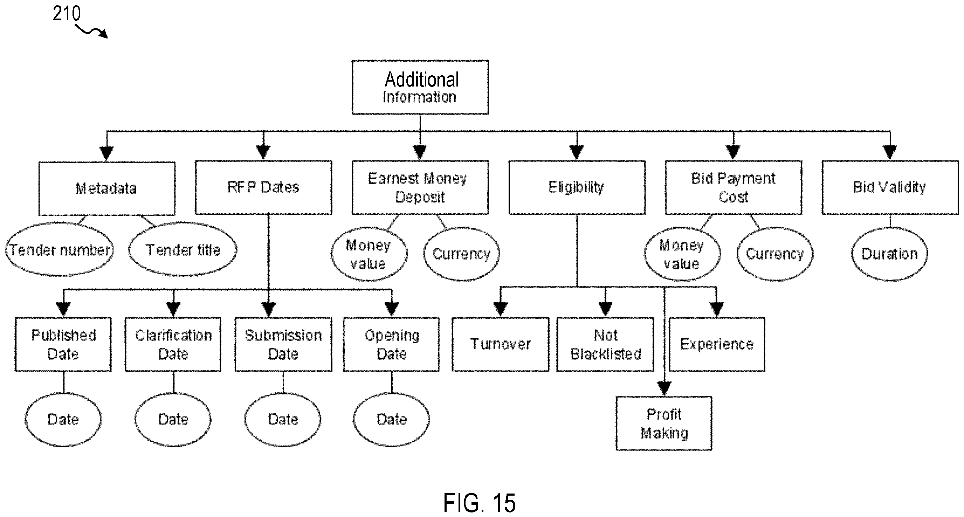

Figure 15 shows another data model 210 for capturing other data from an textual system description. These intents and entities may (but do not necessarily) contribute to the specific design and configuration of a system. For example, it may be desirable to enable parsing of eligibility criteria in order to determine whether or not a bid may be placed. The other data model 210 of Figure 15 may be applicable for a wider variety of textual descriptions and may be combined with the more domain-specific data model 200 for the respective technical system domain.

The other data model 210 may be used in addition (or in some cases also as an alternative) to the data model 200.

### Initial Data Generation

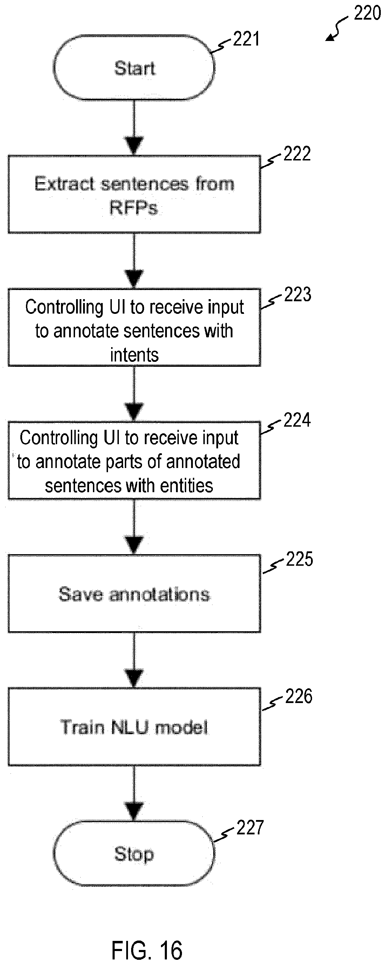

The initial data model (which may be determined as described above) may be used to prepare an initial data set of annotated text. Figure 16 illustrates the process 220. The initial data generation may but does not need to be a method step of the methods disclosed herein. For illustration, the processing logic generation system 20 and/or methods disclosed herein may be operative to perform an automatic labeling based on previously annotated textual descriptions.

Textual system descriptions may contain unstructured text in heterogeneous formats. The processing logic generation system 20 may execute a module to extract the contents of textual system descriptions in plain text format. The processing logic generation system 20 may allow users to annotate sentences. The processing logic generation system 20 may control a user interface to allow a user to select sentences (or other text items) in a graphical user interface (GUI). For example, processing logic generation system 20 may allow a user to select a sentence in its entirety by dragging the mouse or any other pointing device. The processing logic generation system 20 may allow a user to select the appropriate intent (label). In other words, in the initial data generation, a label can be assigned to a sentence, which completes its intent annotation.

One or more phrase in such an annotated sentence may contain useful information. The processing logic generation system 20 may allow a user to select text of such a phrase using the aforementioned process. Subsequently, selection of the appropriate attribute (entity) may be enabled by control of the user interface. This completes the entity annotation for that particular phrase. The process may be repeated to annotate all entities, if there is any, in a sentence already annotated with an intent.

Entity annotation is optional. For illustration, informative phrases may not be available in some sentences.

Figure 16 is a flow chart of a method 220 operative as described above.

The method starts at 221. At step 222, sentences are extracted from technical system descriptions (such as RFPs, without being limited thereto).

At step 223, a user interface is controlled to receive input that annotates sentences with intents.

At step 224, the user interface may be controlled to receive input to provide entity annotation. As mentioned above, this step is optional or may be performed selectively for only part of the text items.

At step 225, the annotations are saved.

At step 226, a NLU model may be trained.

The method ends at step 227.

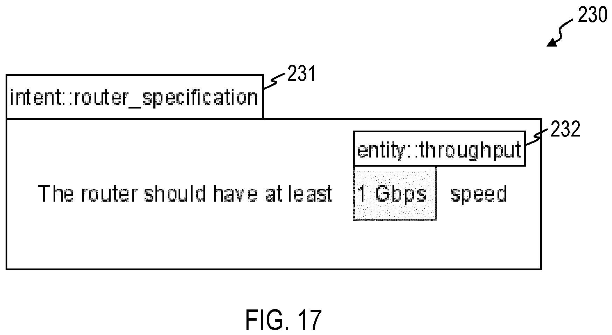

Figure 17 illustrates an example sentence 230 annotated with an intent 231 and a phrase annotated with an entity 232. The annotations 231, 232 may be obtained from data models such as the data models 200, 210 explained above.

The aforementioned process of intent and entity annotation may be repeated for plain text extracted from multiple textual system descriptions. All these annotations may be saved. Finally, the saved annotations may be used by the processing logic generation system 20 to train a Natural Language Understanding (NLU) model, which allows to identify intents and entities from a given text.

### Modification of labels (e.g., intents)

In some cases, a data model (that may include labeled text items and associated labels) could turn out to be insufficient to capture all the intents with sufficient accuracy. The available labels and/or labels that have already been assigned by be modified. This may be implemented in each iteration in Figure 11, respectively after AI model training. The data model may thus be improved as more training data becomes available and increases the diversity.

Let $X$ and $Y$ be two distinct intents (labels). Let $a(X, Y)$ be a relative ambiguity between $X$ and $Y$. The relative ambiguity may be obtained based on the prediction output after a previously trained NLU model is tested with test data. For example, an intensity of cells in a confusion matrix may be determined and may provide an indication of the relative ambiguity. This indication of relative ambiguity may be output.

If $a(X, Y)$ is less than a pre-defined threshold, then there is no pronounced ambiguity between these two classes. In other words, the two intent classes (labels), $X$ and $Y$, seem to be sufficiently distinct and therefore, they are retained. On the other hand, if the relative ambiguity between any two intents exceeds the pre-defined threshold, the two intent classes may lack in sufficient distinctive features. It may be determined automatically whether or not two classes are sufficiently distinguished to allow a reliable distinction.

If two classes are not sufficiently distinguished, a user interface may be controlled to allow one of the following actions to be taken:

- Altering the intent labels of one or more sentence until the NLU model improves.

- Doing nothing, i.e., retain both the intents X and Y.
- Merging X and Y into a single intent class say, Z, and use either one of the labels to identify the latter . Accordingly, all text labeled with X or Y are automatically re-annotated with label Z.
- Creating a new set of data points, Z, and moving the most similar data points from X and Y to Z; create two new intent classes, X-Z and Y-Z, which contain the data points present in X but not in Z and those present in Y but not in Z, respectively.

The programming logic generation system 20 may be operative such that a user can be requested to select one of these choices.

Responsive to the user selecting the second option, no change is made by the programming logic generation system 20.

Responsive to the user selecting the third option, the existing texts annotated as X may be annotated as Y; X may be deleted by the programming logic generation system 20. Alternatively, existing text annotated as Y may then be annotated as X; Y may be deleted by the programming logic generation system 20. A new set of configurations may be stored in the database.

Responsive to the user selecting the fourth option, a new set of configurations may be stored in the database by the programming logic generation system 20.

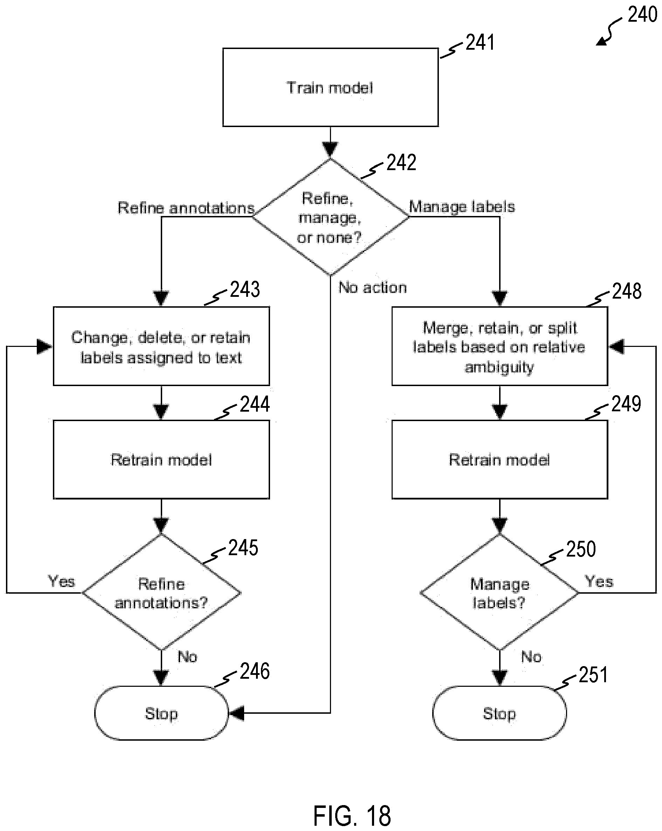

Figure 18 illustrates an implementation of a label modification. The programming logic generation system 20 may allow existing intents to be modified (steps 243-245). The programming logic generation system 20 may allow the intent labels to be modified (steps 248-250).

The two branches (i) steps 243-245 (modification of existing intents) and (ii) steps 248-250 (modification of labels) may be performed in a mutually exclusive manner in each iteration of the iterative process. A decision on which branch is followed may be taken at step 242 after AI model training has been performed at step 241.

A decision on which of the two branches (modification of existing intents or managing labels) will be used in any iteration of the iterative process may be taken at step 242 automatically (e.g., depending on the ambiguity $a(X, Y)$ ) or by controlling a user interface to enable user input.

At step 248, two or more child intents can be merged with a parent intent. For example, consider that the intents edge_router_specification and core_router_specification are children of the intent router_specification. In case there is not enough data to distinguish between the two children, they can be merged together into the single router_specification intent. All existing annotations are automatically updated. This process can be performed automatically by the processing logic generation system 20.

At step 249, the AI model may be retrained based on these configurations by the programming logic generation system 20. The newly trained model may be tested. The new test results - optionally including the relative ambiguity measures - may be output, e.g., by controlling a user interface.

At step 250, it may be determined whether steps 248 and 249 are to be repeated for other labels.

At step 251, the branch ends for modifying labels ends.

Steps 248-250 may be used to modify intent labels. The programming logic generation system 20 may be operative such that entity labels cannot be modified in the branch with steps 248-250. However, the refine annotations branch 243-246 may allow entity labels to be modified, in addition to enabling a modification of intent classes.

As noted above, and as shown in steps 243-246, existing intents may be modified. This applies to both intent classes and entity labels.

At step 243, labels assigned to text may be changed, deleted, or retained. This may be performed automatically. Alternatively or additionally, the programming logic generation system 20 may be operative such that a user interface is controlled to enable a user to specify which and/or who labels are to be changed, deleted, or retained.

At step 244, the AI model may be retrained based on these altered intents by the programming logic generation system 20. The newly trained model may be tested. The new test results - optionally including the relative ambiguity measures - may be output, e.g., by controlling a user interface.

At step 245, it may be determined whether steps 243 and 244 are to be repeated for other annotations.

At step 246, the branch ends for modifying labels ends.

### AI model training and/or testing

The AI model (which may be a NLU model as explained above) can be trained using known techniques, such as machine learning, deep learning, and natural language processing. The training may be performed automatically by the processing logic generation system 20. One or more such techniques may be used in conjunction. In addition, other components, such as numerical representations of words, sentences, and documents may be involved in the process.

To train an AI (e.g., NLU) model, the entire set of annotated data may be collated and split into training and testing data sets. The training data set may be used to train an NLU model. In particular, the training data set may be trained to identify intents from text based on the annotations. Entities may optionally be identified by training the AI model accordingly. The annotation of the entities may but does need not be implemented based on semantic distances.

Training for intent identification and, if implemented, entity identification may be performed jointly or independently.

The training process may involve one or more pre-processing steps, such as converting text to lower case and generating tokens based on the text.

A model, which may also be referred to as AI (e.g., NLU) model, may be generated by a training process and stored in a database (such as data storage 23). The testing set of data is used to evaluate the performance of the trained AI (e.g., NLU) model by considering different performance metrics, such as precision and recall. The corresponding configuration is saved in the database (such as data storage 23). A saved AI (e.g., NLU) model can be used to make predictions on any input text.

The data generated in AI model training and/or testing may be stored for subsequent use. For illustration, model precision and/or a number of training data points may be determined and stored for subsequent use in determining a most suitable AI model.

The data generated in AI model training and/or testing may be stored as a historical and/or hierarchical configuration data.

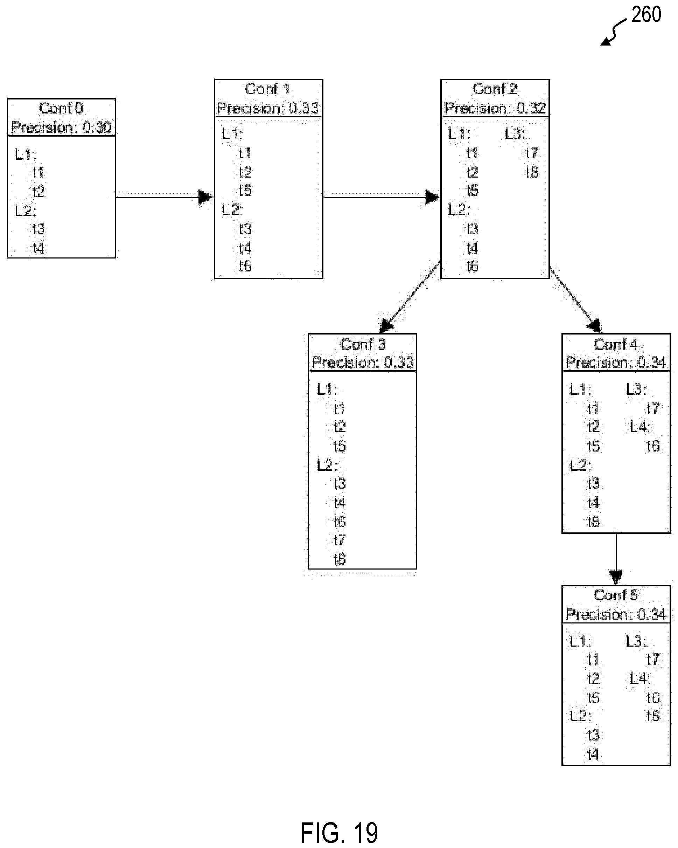

Figure 19 illustrates the historical and hierarchical configurations stored in a database. The values used are only for the purpose illustration. "Conf 0" refers to the root configuration with the two labels (L1 and L2), four text items as data points, and a model precision of 0.30. Additional information, if any, can be stored with the configurations as well.

"Conf 1" represents a configuration obtained after adding new data points, t5 and t6, which improved the precision to 0.33. In "Conf 2," a new label is created with two addition data points. "Conf 3" and "Conf 4" are derivates of this particular configuration-in the former case, the labels L2 and L3 have been merged together, whereas in the latter case, a new label, L4, is created. Finally, "Conf 5" illustrates an instance where an existing text annotation is changed from the label L2 to the label L4. A user can choose any of these configurations as a parent to generate the next configuration. In addition, the processing logic generation system 20 may notify a user, for example, using visual highlighting, when a configuration achieves the optimal performance so far in terms of the desired metrics, such as precision and number of training data points.

The processing logic generation system 20 may automatically evaluate plural configurations to identify and recommend the relatively better configuration. For example, in Figure 19, the processing logic generation system 20 can evaluate both "Conf 3" and "Conf 4" and recommend the latter, since it offers higher precision. Therefore, the system can help in identifying the optimal NLU model for textual system descriptions.

*Annotations And Training Performance*

The annotation and training loop may be continued (Figure 11) until a satisfactory level of performance is reached. The satisfaction criteria can be decided based on one or more criteria, such as the number of data points used for training and testing, the contemporary values of model precision and recall, and the validation test loss. The processing logic generation system 20 may allow users to themselves specify, via a user interface controlled by the processing logic generation system 20, whether or not an appropriate satisfaction level has been reached, based on one or more of the desired metrics. Alternatively or additionally, the processing logic generation system 20, based on pre-defined thresholds, can highlight when such a satisfaction level is reached or is being approached.

For illustration, the need for at least 10,000 training data points and a target precision of 90% may be desired in some cases. An appropriate tolerance boundary, for example, 5%, may also be defined. Assume that 9,500 data points have been generated based on annotations of several textual system descriptions. The processing logic generation system 20 may determine and, optionally, confirm that one of the desired performance criteria has been achieved.

For further illustration, at a later time instant, 9,700 training data points may be available, together with a model precision of 87%. The processing logic generation system 20 may automatically stop the annotations and training loop at this point. Alternatively, the processing logic generation system 20 may control a user interface to request the user to specify whether or not to stop the process.

The satisfaction level may be used by the processing logic generation system 20 for an automatic switching to an automated annotation process. For illustration, determination of an initial data set may still require expert knowledge for annotating an initial set of data points with intents and, optionally, entities until a desired volume and performance level are obtained. The pre-defined thresholds of satisfaction level for initial data set generation can be used by the processing logic generation system 20 to identify when to halt this phase and move to the next phase. Alternatively, processing logic generation system 20 may be operative to control a user interface so as to allow a user to choose to initiate the automatic phase.

The metrics used to identify a satisfaction level may constitute a partially ordering. For example, in case of binary classification between two classes, precision and recall may have higher priority than accuracy. In such scenarios, even if a desired threshold of model accuracy is reached, the processing logic generation system 20 may infer that the desired level of satisfaction is yet to be achieved.

*Using a Trained AI Model as Processing Logic*

The trained AI (e.g., NLU) model generated using the aforementioned procedure may be used to extract information from new textual system descriptions. Such information can be used for different purposes, such as identification of suitable devices and the layout of communication or utility systems.

The extracted specifications from a new textual system description may be automatically matched against the available products to identify the components that are most suitable for installation in the system. The matching can be performed on various attributes, such as supported protocols, throughputs, and certifications. Prior knowledge (either from a domain expert or from a knowledge base) and information on the pertinent domain can be used to identify suitable devices, device configurations, etc.

*Illustrative example*

Different network switches (such as network switches that may come from different manufacturers or that may have different device configurations, without being limited thereto) may have similar characteristics and specifications and serve similar purposes. However, the former is typically used with power grids, while the latter is often used with other industries, such as transportation. Domain knowledge or patterns from a knowledge base can be used to determine the most suitable device. Similarly, if there is any mention of teleprotection in the textual system description, that is an indicator that one of the network switches may be more appropriate than the other.

Once relevant devices, such as network switches, are identified, prior knowledge from an existing knowledge base can be used to automatically determine an appropriate network topology and generate relevant generic configuration files. For example, if an textual system description is related to inter-substation networks and the number of sites is known, a ring topology may be generated. Alternatively, any topology specified in the textual system description, such as in form of text or diagrams, can be used in this regard.

Based on the topology, appropriate configuration files may be automatically determined. A knowledge base can also be used in this process. For example, the volume and/or type of traffic to be injected in the network can be identified. In addition or as an alternative, appropriate VLANs and/or firewall rules can be created. The performance of such a system can be measured using either simulation, emulation, testbed, or any combination of them. The measure performance can be compared against appropriate Service Level Agreements (SLAs) as retrieved from the textual system description or present in the knowledge base.

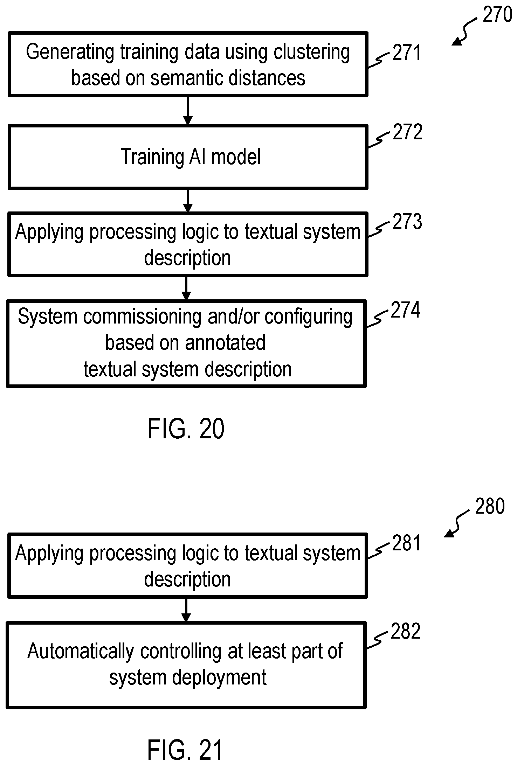

Figure 20 is a flow chart of a method 270. The method 270 may use a generated processing logic for commissioning and/or configuring a technical system (such as a power system or communication system).

At step 271, training data for AI model training is generated using a clustering technique based on semantic distances. The generation of training data may comprise labeling textual system descriptions.

At step 272, an AI model is trained. While not shown in Figure 20, steps 271 and 272 may be repeated iteratively.

At step 273, the processing logic obtained by the trained AI model may be executed. The processing logic may be used to process a textual system description. The processing logic may be used to process the textual system description into an annotated textual system description.

At step 274, results of the labeling may be used for commissioning and/or configuring devices of a technical system (such as a utility system or communication system) based on the annotated textual system description.

Figure 21 is a flow chart of a method 280. The method 280 may additionally include steps for generating a trained AI model, as described in association with steps 271 and 272.

At step 281, the processing logic obtained by the trained AI model may be executed. The processing logic may be used to process a textual system description. The processing logic may be used to process the textual system description into an annotated textual system description.

At step 282, results of the labeling may be used for controlling operation of at least part of a deployment and/or operation of devices of a technical system (such as a utility system or communication system) based on the annotated textual system description.

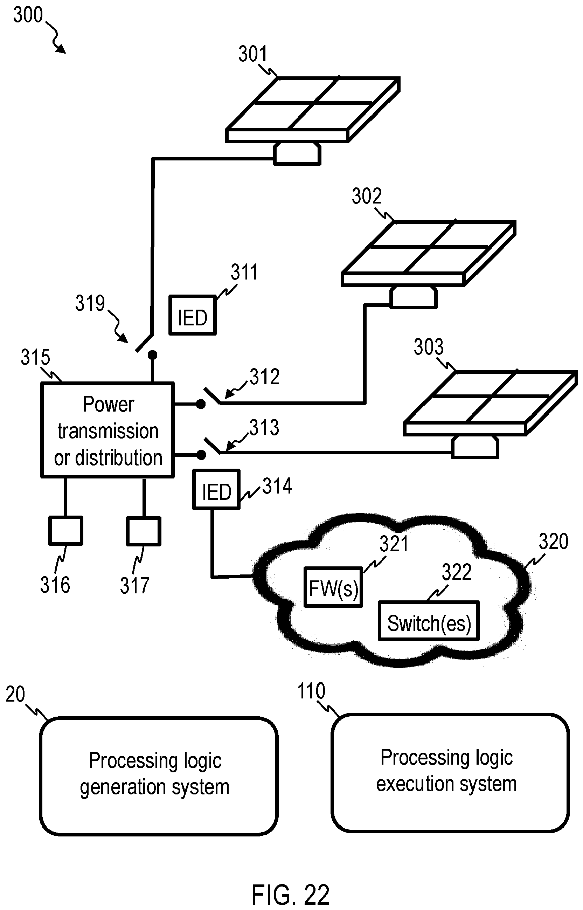

Figure 22 is a schematic view of a system 300 in which an input device 40 and command generation system 20 can be used to generate and issue commands to a controlled system (in the present case, an electric power system).

The system 300 comprises a distributed energy resource (DER) or microgrid. Several generators 301-303 provide electric power. The DER or microgrid may also comprise several loads 316, 317 connected to the generator(s) 301-303 via an electric power transmission and/or distribution system 315. Circuit breaker(s) (CB(s)), protection relay(s), and/or other power switches 312, 313, 319 may allow generators 301-303 and/or loads 316, 317 to be selectively coupled. IED(s) 311 are deployed for controlling primary components. The IED(s) may be communicatively coupled via a communication network 320. The communication network 320 may include communication devices, such as one or several firewalls 321 and/or one or several communication switch(es) 323.

A processing logic generation system 20 may be operative to automatically label textual system descriptions to generate a processing logic. The processing logic generation may be performed using any one of the techniques disclosed herein.

A processing logic execution system 110 may be operative to execute the generated processing logic.

The processing logic execution system 110 may process a textual system description of the system 300 for commissioning and/or configuring the system 300. This may comprise the generation of configuration data, such as configuration files.

Alternatively or additionally, during field use of the system 300, the processing logic execution system 110 may process a textual system description of the system 300 for controlling devices (such as secondary devices 311, 314 or primary devices) of a utility system 300 and/or for controlling devices (such as firewalls and/or network switches) of a communication system 320 during field use.

Various effects are attained by the systems, devices, and methods disclosed herein. The systems, devices, and methods facilitate the automatic generation of annotated textual system descriptions from unannotated textual system descriptions. These annotated textual descriptions may be used for generating an improved processing logic for processing a textual description of a technical system.

The systems, devices, and methods contribute to an automated generation of a large, labeled data set for training an AI model based on a small, initial data set. The systems, devices, and methods allow labels (and thereby, the AI model) to be modified in an iterative process by providing techniques for merging or splitting labels. This allows accuracy to be improved. The systems, devices, and methods facilitate the generation of an optimized AI model by automatic consideration of different configurations/combinations of data points and/or labels.

The systems, devices, and methods may be used in association with textual descriptions of utility systems (such as electric power systems) and/or communication systems, without being limited thereto.

**Claims**

1. A method of generating a processing logic operable to automatically process a textual system description related to a system, in particular related to a utility system, industrial system, or computing and/or communication network, the method comprising the following steps performed by a computing system:

   performing an automatic labeling of textual descriptions included in a training batch of textual descriptions to generate an annotated training batch, wherein performing the automatic labeling comprises performing a clustering technique to annotate a text item included in the training batch with a label from a set of labels based on semantic distances of the text item from text items previously assigned to labels of the set of labels; and
   training an AI model using the annotated training batch to generate the processing logic.

2. The method of claim 1, wherein the set of labels comprises intent classes, optionally wherein the set of intent classes comprises intent classes related to distinct devices of the system.

3. The method of claim 2, wherein the set of labels comprises attributes for at least some of the intent classes, optionally wherein the attributes for an intent class define entities related to a device to which the intent class relates.

4. The method of any one of the preceding claims, further comprising executing, after the training, the AI model for processing the textual system description into an annotated textual system description.

5. The method of any one of the preceding claims, further comprising iteratively repeating the steps of performing the automatic labeling and training the AI model until a performance criterion is fulfilled.

6. The method of any one of the preceding claims, further comprising

   modifying the set of labels or modifying labels assigned in the automatic labelling, and
   re-training the AI model.

7. The method of claim 6, wherein the method comprises modifying the set of labels, comprising one or several of:

   merging at least two labels of the set of labels into one label,
   splitting a label of the set of labels into at least two labels,
   retaining a label of the set of labels,

   optionally wherein modifying the set of labels is performed automatically and/or responsive to user input received via a user interface.

8. The method of any one of the preceding claims, wherein performing the automatic labeling comprises
   annotating each text item included in the training batch with a respective label from the set of labels if a semantic distance to at least one cluster in the clustering technique fulfils a semantic distance threshold criterion.

9. The method of claim 8, wherein performing the automatic labeling comprises
   leaving a text item included in the training batch unannotated if the semantic distance to all clusters in the clustering technique does not fulfil the semantic distance threshold criterion.

**10.** The method of claim 8 or claim 9, wherein the semantic distance of the text item to a cluster may be an averaged semantic distance of the text item to all text items that belong to the respective cluster.

**11.** The method of any one of the preceding claims,

wherein the AI model has an input layer that receives a text item included in the textual system description and an output layer that outputs an annotation for the text item included in the textual system description, and/or wherein the AI model comprises a Natural Language Processing, NLP, transformer, optionally wherein the NLP transformer comprises an encoder-decoder model with self-attention layers,

optionally wherein an encoder of the NLP transformer comprises a stack of encoder layers, each encoder layer comprising a self-attention layer and a feedforward network, further optionally wherein the feedforward network is a fully connected 2-layer network, and/or optionally wherein the AI model comprises a Conditional Random Field, CRF, layer which receives an output of the NLP transformer.

**12.** A method of automatically generating and/or evaluating a system configuration, in particular a system configuration of a utility system, industrial system, or computing and/or communication network, the method comprising the following steps performed by a computing system:

performing a method of any one of the preceding claims to generate a processing logic operable to automatically process a textual system description related to the system; receiving the textual system description related to the system; processing the textual system description using the AI model to generate an annotated textual system description; and generating output based on the annotated textual system description.

**13.** The method of claim 12, wherein generating output comprises one or several of:

automatically configuring at least one device of the system based on the annotated textual system description; automatically generating configuration data for at least one device of the system based on the annotated textual system description and storing the configuration data in the at least one device for field operation of the system, optionally wherein the configuration data comprises at least one Substation Configuration Description, SCD, file, further optionally wherein the SCD file is an IEC 61850-conformant SCD file; automatically selecting devices for deployment in the system based on the annotated textual system description; automatically determining a system topology of the system based on the annotated textual system description.

**14.** A computing system adapted for generating a processing logic operable to automatically process a textual system description related to a system, in particular related to a utility system, industrial system, or computing and/or communication network, the computing system comprising at least one circuit adapted to perform a method comprising the following steps:

performing an automatic labeling of textual descriptions included in a training batch of textual descriptions to generate an annotated training batch, wherein performing the automatic labeling comprises performing a clustering technique to annotate a text item included in the training batch with a label from a set of labels based on semantic distances of the text item from text items previously assigned to labels of the set of labels; and training an AI model using the annotated training batch to generate the processing logic.

**15.** The computing system of claim 14, wherein the computing system is adapted to perform the method of any one of claims 1 to 13.

FIG. 1

FIG. 2

FIG. 3

FIG. 4

FIG. 5

Training
documents 40

10

20

Storage system 23

30

1st interface 21

Automatic labeling 31

Training set generation 32

AI model training 33

Processing logic
execution 34

Processing system

2nd interface 22

100

Processing logic generation and
execution system

FIG. 6

130

Automatically determining intent class 131

Automatically determining attribute(s) 132

Labelling text item with intent class and
Attribute(s) 133

FIG. 7

FIG. 8

FIG. 9

150

| Input layer | 141 |

152
- 152a First self-attention layer
- 152b First feed forward network

First encoder layer

⋮

153
- 153a n[th] self-attention layer
- 153b n[th] feed forward network

n[th] encoder layer

154 (stack of) decoder layer(s)

151

144 Conditional Random Field (CRF) layer

FIG. 10

FIG. 11

161 Initial set of annotated data points and initial training

162 Cluster new data points based on semantic distance

163 Train AI model

164 Refine labels or annotations

EP 4 322 046 A1

FIG. 12

FIG. 13

FIG. 14

FIG. 15

220

221
**Start**

222
Extract sentences from RFPs

223
Controlling UI to receive input to annotate sentences with intents

224
Controlling UI to receive input to annotate parts of annotated sentences with entities

225
Save annotations

226
Train NLU model

227
**Stop**

FIG. 16

230

intent::router_specification 231

232

entity::throughput

The router should have at least 1 Gbps speed

FIG. 17

FIG. 18

FIG. 19

```
┌─────────────────────────────────────┐
│  Generating training data using      │ ⟋271
│  clustering based on semantic         │
│  distances                            │
└─────────────────────────────────────┘
                  │
                  ▼
┌─────────────────────────────────────┐
│          Training AI model            │ ⟋272
└─────────────────────────────────────┘
                  │
                  ▼
┌─────────────────────────────────────┐
│  Applying processing logic to         │ ⟋273
│  textual system description           │
└─────────────────────────────────────┘
                  │
                  ▼
┌─────────────────────────────────────┐
│  System commissioning and/or          │ ⟋274
│  configuring based on annotated       │
│  textual system description           │
└─────────────────────────────────────┘
```

270

FIG. 20

```
┌─────────────────────────────────────┐
│  Applying processing logic to         │ ⟋281
│  textual system description           │
└─────────────────────────────────────┘
                  │
                  ▼
┌─────────────────────────────────────┐
│  Automatically controlling at least   │ ⟋282
│  part of system deployment            │
└─────────────────────────────────────┘
```

280

FIG. 21

300

301

302

311

319

IED

315

312

Power
transmission
or distribution

303

313

IED 314

316    317

321    320

FW(s)

322

Switch(es)

20

110

Processing logic
generation system

Processing logic
execution system

FIG. 22

# EUROPEAN SEARCH REPORT

**Application Number**

EP 22 19 6465

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2021/264111 A1 (ADITYA SOMAK [IN] ET AL) 26 August 2021 (2021-08-26) | 1-11,14, 15 | INV. G06F40/30 G06F8/30 |
| A | * paragraphs [0001], [0003], [0005], [0015], [0020], [0021], [0028] - [0030] * <br> * paragraphs [0031] - [0034]; figure 1 * <br> * paragraphs [0037] - [0039]; figure 2 * <br> * paragraphs [0041] - [0051]; figure 3 * <br> * paragraphs [0053] - [0061], [0063]; figure 4 * <br> * paragraphs [0065], [0067] - [0074]; figure 5 * <br> * paragraphs [0077] - [0090]; figures 6-7 * | 12,13 | ADD. G06F40/284 |
| X | NGUYEN MANH-TIEN-ANH ET AL: "When NLP meets SDN : an application to Global Internet eXchange Network", ICC 2022 - IEEE INTERNATIONAL CONFERENCE ON COMMUNICATIONS, IEEE, 16 May 2022 (2022-05-16), pages 2972-2977, XP034167314, DOI: 10.1109/ICC45855.2022.9838633 [retrieved on 2022-08-11] | 12,13 | |
| A | * abstract * <br> * section I * <br> * section III; figures 1,2,3,4,5 * <br> * section IV * | 1-11,14, 15 | |

-/--

**TECHNICAL FIELDS SEARCHED (IPC)**

G06F

The present search report has been drawn up for all claims

| Place of search | Date of completion of the search | Examiner |
|---|---|---|
| Berlin | 5 July 2023 | Chéron, Laurent |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons
...........................................................................
& : member of the same patent family, corresponding
    document

EPO FORM 1503 03.82 (P04C01)

page 1 of 2

Europäisches
Patentamt

European
Patent Office

Office européen
des brevets

# EUROPEAN SEARCH REPORT

Application Number

EP 22 19 6465

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2016/219078 A1 (PORRAS PHILLIP A [US] ET AL) 28 July 2016 (2016-07-28) | 12,13 | |
| A | * paragraphs [0004], [0018] * <br> * paragraphs [0020], [0023], [0029] – [0032]; figure 1 * <br> * paragraph [0070]; figure 4a * <br> * paragraphs [0077] – [0079], [0081], [0084] – [0090]; figure 4b * <br> * paragraphs [0097] – [0100]; figure 5 * <br> * paragraph [0112]; figure 6a * <br> * paragraphs [0115] – [0117]; figure 6b * <br> ----- | 1-11,14, 15 | |
| X | SAHA BARUN KUMAR ET AL: "Intent-based Industrial Network Management Using Natural Language Instructions", 2022 IEEE INTERNATIONAL CONFERENCE ON ELECTRONICS, COMPUTING AND COMMUNICATION TECHNOLOGIES (CONECCT), IEEE, 8 July 2022 (2022-07-08), pages 1-6, XP034177322, DOI: 10.1109/CONECCT55679.2022.9865738 [retrieved on 2022-08-30] | 12,13 | |
| A | * abstract * <br> * section I * <br> * sections III, IV, V, VI; figures 2-6; table II * <br> ----- | 1-11,14, 15 | |
| T | SAHA BARUN KUMAR ET AL: "A Natural Language Understanding Approach Toward Extraction of Specifications from Request for Proposals", 2023 INTERNATIONAL CONFERENCE ON ARTIFICIAL INTELLIGENCE IN INFORMATION AND COMMUNICATION (ICAIIC), IEEE, 20 February 2023 (2023-02-20), pages 205-210, XP034314313, DOI: 10.1109/ICAIIC57133.2023.10067032 [retrieved on 2023-03-23] * the whole document * <br> ----- | 1-15 | |

TECHNICAL FIELDS
SEARCHED (IPC)

The present search report has been drawn up for all claims

| Place of search | Date of completion of the search | Examiner |
|---|---|---|
| Berlin | 5 July 2023 | Chéron, Laurent |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 22 19 6465

This annex lists the patent family members relating to the patent documents cited in the above-mentioned European search report.
The members are as contained in the European Patent Office EDP file on
The European Patent Office is in no way liable for these particulars which are merely given for the purpose of information.

05-07-2023

| Patent document cited in search report | Publication date | Patent family member(s) | Publication date |
|---|---|---|---|
| US 2021264111 A1 | 26-08-2021 | NONE | |
| US 2016219078 A1 | 28-07-2016 | NONE | |

For more details about this annex : see Official Journal of the European Patent Office, No. 12/82

EPO FORM P0459